(19) **Europäisches Patentamt / European Patent Office / Office européen des brevets**

(11) **EP 4 768 791 A1**

(12) **EUROPEAN PATENT APPLICATION**
published in accordance with Art. 153(4) EPC

(43) Date of publication:
01.07.2026 Bulletin 2026/27

(21) Application number: 24900807.9

(22) Date of filing: 30.09.2024

(51) International Patent Classification (IPC):
F24C 15/32 (2006.01)     F24C 11/00 (2006.01)
H02K 7/14 (2006.01)      H02K 5/24 (2006.01)
H02K 11/02 (2016.01)     H02K 5/04 (2006.01)
F24C 7/06 (2006.01)      F24C 3/08 (2006.01)

(52) Cooperative Patent Classification (CPC):
H02K 11/0141; F24C 3/08; F24C 7/06; F24C 11/00;
F24C 15/32; F24C 15/322; H02K 5/02; H02K 5/04;
H02K 5/24; H02K 7/14; H02K 11/02

(86) International application number:
PCT/KR2024/014865

(87) International publication number:
WO 2025/121619 (12.06.2025 Gazette 2025/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 05.12.2023 KR 20230174615

(71) Applicant: Samsung Electronics Co., Ltd.
Suwon-si, Gyeonggi-do 16677 (KR)

(72) Inventors:
• KIM, Daekee
  Suwon-si Gyeonggi-do 16677 (KR)
• RYU, Hyeongi
  Suwon-si Gyeonggi-do 16677 (KR)
• LEE, Nokhaeng
  Suwon-si Gyeonggi-do 16677 (KR)
• LEE, Jeawon
  Suwon-si Gyeonggi-do 16677 (KR)

(74) Representative: Walaski, Jan Filip et al
Venner Shipley LLP
TIDE Bankside
8 Emerson Street
London SE1 9DU (GB)

(54) **COOKING APPLIANCE**

(57) An oven according to an embodiment of the present invention may include a cavity that forms a cooking space therein. The oven may comprise a convection assembly disposed on the rear wall of the cavity. The convection assembly may include: a convection fan that generates air flow in the cooking space; a convection motor that generates driving force for the convection fan; and a motor cover surrounding at least a portion of the convection motor. The motor cover may be made of a magnetic material to induce a magnetic flux that is generated when the convection motor is driven.

*FIG.4*

EP 4 768 791 A1

# Description

## [Technical Field]

Various embodiments of the disclosure relate to a cooking appliance including a cooktop or an oven.

## [Background Art]

A cooking appliance, which is a home appliance provided in a kitchen, is normally used to cook food. The cooking appliance may include, for example, a cook top or an oven.

As an example of such a cooking appliance, an oven is a home appliance for heating and cooking food in a cooking chamber provided therein.

Such ovens may be classified into an electric type oven, a gas type oven, and an electronic type oven according to their heating methods (or a heating source). For example, an electric type oven uses an electric heater as a heating source, and a gas type oven and a microwave oven may use, as a heat source, heat by gas burning and frictional heat of water molecules due to high frequency, respectively.

In general, an oven may include a cooking chamber in which food is cooked, a heater for supplying heat to the cooking chamber, a circulation fan for circulating the heat generated by the heater within the cooking chamber, and a fan motor for providing a driving force to the circulation fan.

Upon operation of the circulating fan and the fan motor, electromagnetic noise may be generated within the oven as the magnetic field generated by the fan motor passes through the structure adjacent to the fan motor and causes the structure itself to vibrate.

## [Disclosure of Invention]

## [Technical Problem]

Various embodiments of the disclosure may provide a motor cover configured to surround a convection motor disposed on a rear wall of a cavity and made of a magnetic material.

An oven according to an embodiment of the disclosure may include a cavity forming a cooking chamber therein. The oven may include a convection assembly disposed on a rear wall of the cavity. The convection assembly may include a convection fan configured to form an air flow in the cooking chamber, a convection motor configured to generate a driving force to the convection fan, and a motor cover configured to surround at least a portion of the convection motor. The motor cover may be made of a magnetic material to induce a magnetic flux generated upon driving of the convection motor.

A cooking appliance according to an embodiment of the disclosure may include a cooktop disposed on an upper side of the cooking appliance. The cooking appliance may include an oven disposed underneath the cooking appliance. The oven may include a cavity forming a cooking chamber therein. The oven may include a convection assembly disposed on a rear wall of the cavity. The convection assembly may include a convection fan configured to form an air flow in the cooking chamber, a convection motor configured to generate a driving force to the convection fan, and a motor cover configured to surround at least a portion of the convection motor. The motor cover may be made of a magnetic material to induce a magnetic flux generated upon driving of the convection motor.

According to various embodiments of the disclosure, in a convection assembly including a convection fan, a convection fan motor, and a motor cover, the motor cover is configured to surround the convection fan motor and is made of a magnetic material, and thus a magnetic field generated during operation of the convection fan motor may be blocked from entering into a structure made of a magnetic material such as a cavity, thereby reducing noise caused by self-vibration of the cavity.

Effects that are obtainable from example embodiments of the disclosure may be clearly derived and understood from the following description by those having ordinary knowledge in the technical field to which the embodiments of the disclosure belong. In other words, unintended effects in practicing the example embodiments of the disclosure may be also derived by those having ordinary knowledge in the technical field from the embodiments of the disclosure.

## [Brief Description of Drawings]

In connection with the description of the drawings, the same or similar reference numerals may be used for the same or similar components, in which:

FIG. 1 is a perspective view of a cooking appliance with its door open, according to an embodiment of the disclosure;
FIG. 2 is a front view of a cooking appliance showing an enlarged view of an interior of a cooking chamber, according to an embodiment of the disclosure;

FIG. 3 is a cross-sectional view taken along line I-I' shown in FIG. 2;

FIG. 4 is a perspective view of a convection assembly according to an embodiment of the disclosure;

FIG. 5 is a perspective view of a convection assembly according to an embodiment of the disclosure;

FIG. 6 is an exploded perspective view of a convection assembly according to an embodiment of the disclosure;

FIG. 7 is a perspective view of an example convection assembly according to an embodiment of the disclosure;

FIG. 8 is a perspective view of an example convection assembly according to an embodiment of the disclosure;

FIG. 9 is a perspective view of an example convection assembly according to an embodiment of the disclosure;

FIGS. 10A and 10B are diagrams schematically illustrating a magnetic circuit between a surrounding structure and a convection fan motor, according to a comparative example of the disclosure;

FIGS. 11A and 11B are diagrams schematically illustrating an example of a magnetic circuit between a surrounding structure and a convection fan motor according to an embodiment of the disclosure;

FIG. 12 is a graph for comparing the amount of vibrations according to an embodiment of the disclosure and a comparative example; and

FIG. 13 is a graph for comparing noise levels of an embodiment of the disclosure and a comparative example.

**[Mode for the Invention]**

It should be appreciated that various embodiments of the disclosure and the terms used therein are not intended to limit the technological features set forth herein to particular embodiments, and they may include various changes, equivalents, or replacements for a corresponding embodiment.

In connection with the description of drawings, like reference numerals may be used to refer to similar or related components.

The singular form of a noun corresponding to an item may include one or more items, unless the relevant context explicitly indicates otherwise.

As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. For example, the expression "at least one of A, B and C" may include any of the following: A, B, C, A and B, A and C, B and C, A and B and C.

As used herein, such terms as "1st" and "2nd," or "first" and "second" may be used to simply distinguish a corresponding component from another, and does not limit the components in other aspect (e.g., importance or order).

It is to be understood that if an element (e.g., a first element) is referred to, with or without the term "operatively" or "communicatively", as "coupled" or "connected" with/to another element (e.g., a second element), it means that the element may be coupled with the other element directly (e.g., wiredly), wirelessly, or via a third element.

The term such as e.g., "comprise", "include" or "have" is intended to indicate that there are features, numbers, steps, operations, elements, parts, or a combination thereof described in the disclosure, and do not preclude the possibility of presence or addition of one or more other features, numbers, steps, operations, elements, parts, or a combination thereof.

When an element is referred to as being "connected", "coupled", "supported", or "in contact" with/to another element, it includes not only when the element is directly connected, coupled, supported, or in contact with the other element, but also when the element is indirectly connected, coupled, supported, or in contact with the other element via a third element.

When an element is referred to as being located "on" another element, it may include not only when the element is in contact with the other element, but also when another element exists in between the two elements.

The term "and/or" includes any combination of a plurality of related described elements or any one of a plurality of related described elements.

Hereinafter, the operating principle and embodiments of the disclosed invention will be described with reference to the accompanying drawings.

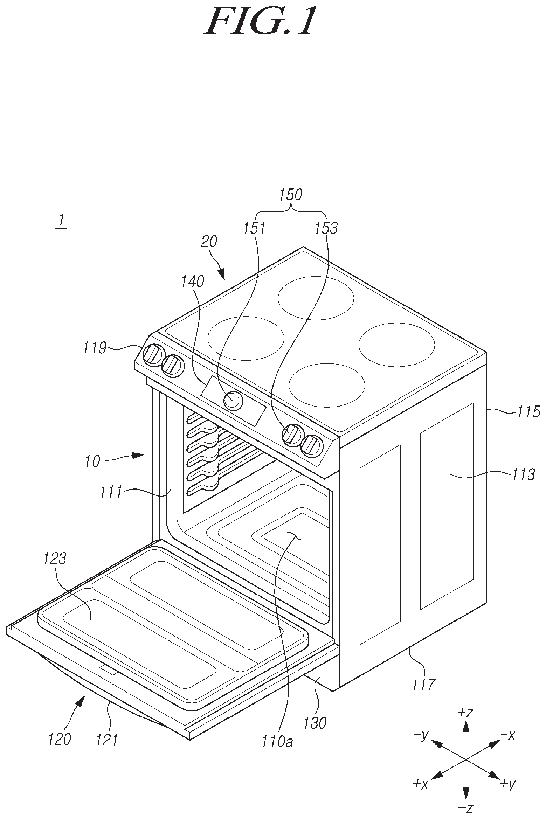

FIG. 1 is a perspective view of a cooking appliance with its door open, according to an embodiment of the disclosure.

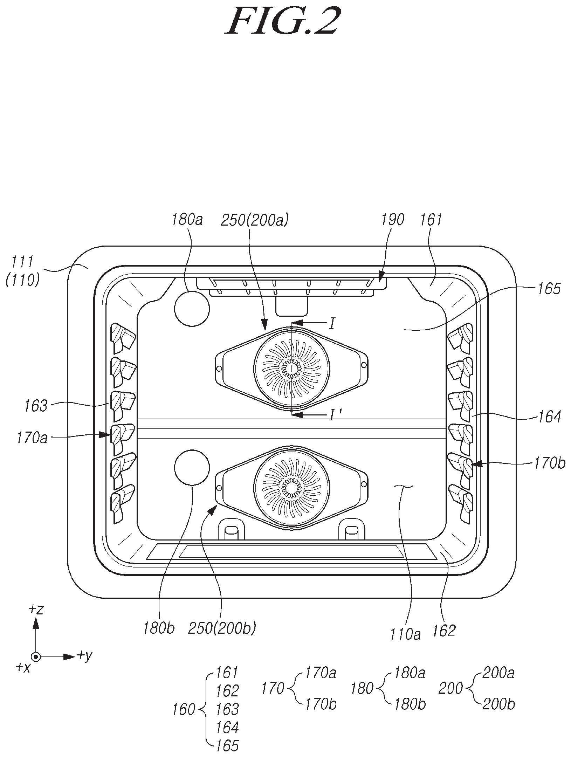

FIG. 2 is a front view of a cooking appliance showing an enlarged view of an interior of a cooking chamber, according to an embodiment of the disclosure.

Referring to FIGS. 1 and 2, a cooking appliance 1 according to an embodiment may include an oven 10 and a cook top 20. As illustrated in FIG. 1, the cooking appliance 1 may include both the oven 10 and the cooktop 20, but alternatively, the cooking appliance 1 may include only the oven 10 without the cooktop 20. The cooking appliance 1 may be provided in a built-in type or a non-built-in type.

According to an embodiment, the oven 10 may be disposed under the cooking appliance 1. In an embodiment, the oven 10 may be configured to receive a cooking item (e.g., food) in a cooking chamber 110a provided therein and to heat the received cooking item.

According to an embodiment, the oven 10 may include a case 110, a door 120, a drawer 130, a display 140, an controller 150, a cavity 160, a plurality of supports 170, a lighting device 180, a heater 190, and a convection assembly 200.

According to an embodiment, the case 110 may form appearance of the oven 10. In an embodiment, the case 110 may have a hexahedral shape in which a front surface (e.g., a surface facing +x axis) is opened. In an embodiment, the cavity 160 may be provided inside the case 110.

According to an embodiment, the case 110 may include a front panel 111 forming a front surface of the oven 10, a side panel 113 forming a lateral surface (e.g., a surface facing ±y axis) of the oven 10, a back panel 115 forming a rear surface (e.g., a surface facing -x axis) of the oven 10, a base panel 117 forming a bottom surface (e.g., a surface facing -z axis) of the oven 10, and a control panel 119 on which the display 140 and the controller 150 are disposed.

According to an embodiment, the door 120 may be rotatably coupled to the front panel 111 of the case 110. In an embodiment, the door 120 may be configured to rotate to open or close the front surface of the case 110. The cooking chamber 110a may be opened or closed by a rotational operation of the door 120. According to an embodiment, the door 120 may include a handle 121 configured to be gripped by a user and a transparent panel 123 configured to visually check the inside of the oven 10 in a closed state of the door 120.

According to an embodiment, the drawer 130 may be provided underneath the oven 10. For example, the drawer 130 may be provided below the cavity 160. In an embodiment, the drawer 130 may form a storage compartment capable of storing cooking containers or the like therein. In an embodiment, the drawer 130 may be configured to be slidable in/out from the oven 10. The storage compartment may be opened or closed by a sliding operation of the drawer 130.

According to an embodiment, the display 140 may be disposed on the control panel 119. For example, the display 140 may be disposed at a central portion of the front surface of the control panel 119. In an embodiment, the display 140 may include a display device such as an LCD panel or a touch panel. The display 140 may provide its user with information on an operating status of the oven 10 and/or the cooktop 20 through the display.

According to an embodiment, the controller 150 may be configured to receive a command related to the operation of the oven 10 and/or the cooktop 20 from the user. In an embodiment, the controller 150 may include a first controller 151 for operating the oven 10 and at least one second controller 153 for operating the cooktop 20. The controllers 151 and 153 may be implemented in the form of either a dial or a knob, but the disclosure is not limited thereto. In an embodiment, the controller 150 may be disposed on the control panel 119. For example, the first controller 151 may be located in the center of the display 140, and the at least one second controller 153 may be located on either side (left or right) or both sides (left and right) of the display 140.

According to an embodiment, the cavity 160 may be provided inside the case 110. In an embodiment, the cavity 160 may form an interior appearance of the oven 10. In an embodiment, the cavity 160 may have a hexahedral shape with an open front surface. The cavity 160 may form the cooking chamber 110a therein with a plurality of inner walls 161, 162, 163, 164 and 165. For example, the cavity 160 may include an upper wall 161, a lower wall 162, a left wall 163, a right wall 164, and a rear wall 165. The open front surface of cavity 160 may be opened or closed by the rotational operation of the door 120. In view of the aforementioned relationship between the case 110 and the cavity 160, the case may be referred to as an exterior of the oven 10 and the cavity 160 may be referred to as an interior of the oven 10. Further, although not specifically shown in the drawings, an insulating material for insulating the cooking chamber 110a may be provided between the case 110 and the cavity 160 of the oven 10.

According to an embodiment, a plurality of supports 170 may be disposed on the left wall 163 and/or the right wall 164 of the cavity 160. In an embodiment, the plurality of supports 170 may protrude from the left wall 163 and/or the right wall 164 of the cavity 160. For example, the plurality of supports 170a and 170b may be formed to protrude from the left wall 163 and the right wall 164 of the cavity 160 at intervals in the vertical direction, and the supports 170a and 170b each formed on the left wall 163 and the right wall 164 may be disposed to face each other. In such a case, a plurality of racks (not shown) carrying food thereon may be detachably mounted onto the plurality of supports 170.

According to an embodiment, on the plurality of supports 170 may be detachably mounted a divider (not shown) capable of dividing the cooking chamber 110a. The divider may be horizontally mounted within the cooking chamber 110a to divide the cooking chamber 110a into independent upper and lower cooking spaces. The divider may be made of an insulating material, and may insulate each divided upper/lower cooking space from the outside.

According to an embodiment, a lighting device 180 may be disposed on the rear wall 165 of the cavity 160. In an embodiment, the lighting device 180 may be configured to provide light inside the cavity 160, for example, inside the cooking chamber 110a. In an embodiment, a plurality of lighting devices 180a, 180b may be provided, and may be arranged on the rear wall 165 of the cavity 160, spaced apart from each other in the vertical direction. When the lighting device 180 is operated while the cooking chamber 110a is shielded from the outside by the door 120, the user may visually observe the interior of the cooking chamber 110a (or food inside the cooking chamber 110a) in detail through the transparent panel 123.

According to an embodiment, the heater 190 may be disposed on the upper wall 161 of the cavity 160. In an embodiment, the heater 190 may be configured to supply heat to the inside of the cavity 160, for example, the cooking chamber 110a. In an embodiment, the heater 190 may include an electric heater using electricity or a gas burner using gas, but the heating method of the heater 190 is not limited thereto.

According to an embodiment, the convection assembly 200 may be disposed on the rear wall 165 of the cavity 160. In an embodiment, a plurality of convection assemblies 200a and 200b may be provided within the cavity, and may be disposed to be spaced apart from the rear wall 165 of the cavity 160 in the vertical direction. In an embodiment, the convection assembly 200 may be configured to transport air by convection inside the cavity 160, for example, inside the cooking chamber 110a. For example, the convection assembly 200 may transport by convection the air heated by the heater 190 inside the cooking chamber 110a to make the temperature inside the cooking chamber 110a uniform.

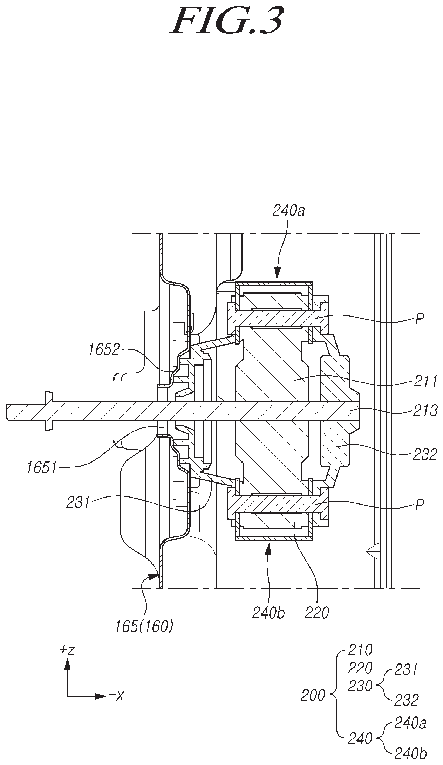

According to an embodiment, the convection assembly 200 may include a convection fan (not shown) configured to form an air flow inside the cooking chamber 110a, a fan housing 250 configured to cover the convection fan, and convection fan motors (210 and 220 of FIG. 3) configured to provide a driving force to the convection fan. The fan housing 250 may be disposed on the rear wall 165 of the cavity 160. The fan housing 250 may include a plurality of holes for air inflow and outflow. Hereinafter, a more detailed structure of the convection assembly 200 will be described later with reference to FIGS. 3 to 6.

According to an embodiment, the cooktop 20 may be disposed on top of the cooking appliance 1. In an embodiment, the cooktop 20 may be configured to heat a container receiving a cooking item (e.g., food). The cooktop 20 may be implemented, for example, in the form of an electric range that uses electricity to heat a container receiving the cooking item or a gas range that utilizes gas to heat a container receiving the cooking item.

FIG. 3 is a cross-sectional view taken along line I-I' shown in FIG. 2.

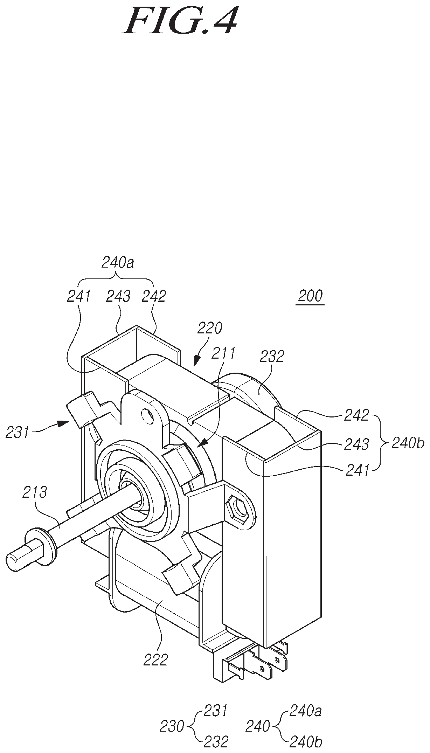

FIG. 4 is a perspective view of a convection assembly according to an embodiment of the disclosure.

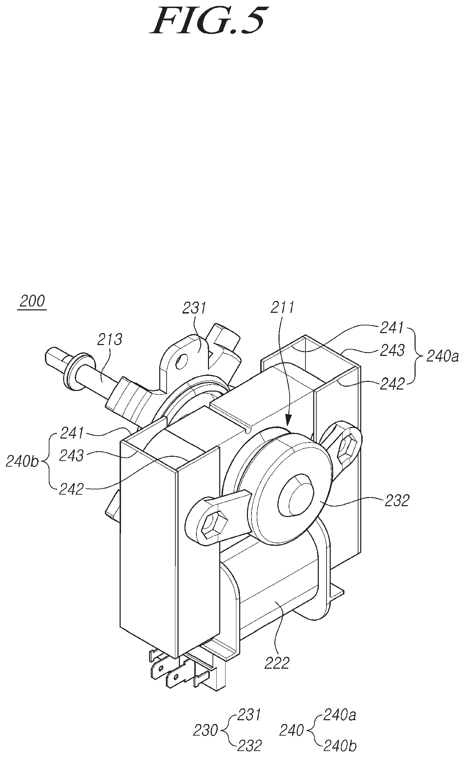

FIG. 5 is a perspective view of a convection assembly according to an embodiment of the disclosure.

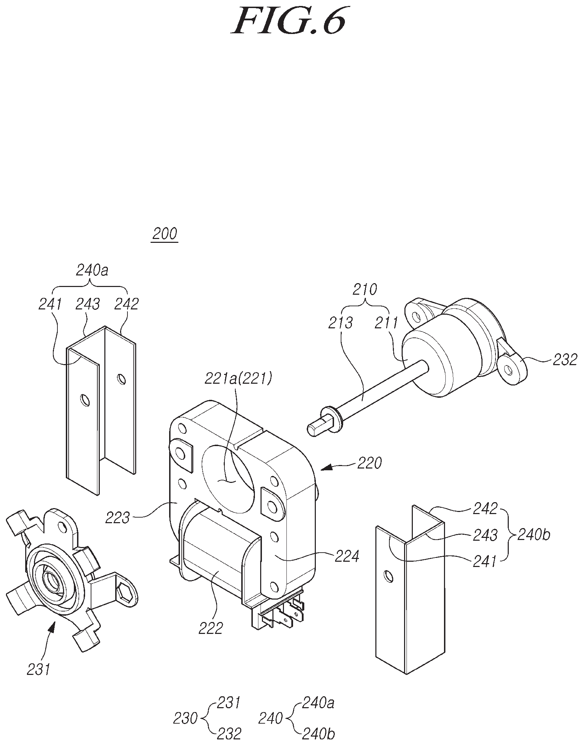

FIG. 6 is an exploded perspective view of a convection assembly according to an embodiment of the disclosure.

FIGS. 3 to 6 are views illustrating the convection assembly 200 from which a fan housing (e.g., the fan housing 250 of FIG. 2) and a convection fan (not shown) are removed.

Referring to FIGS. 3 to 6, the convection assembly 200 according to an embodiment may include a rotor 210, a stator 220, a fixing part 230, and a motor cover 240. Here, the rotor 210 and the stator 220 may be collectively referred to as a convection fan motor 210 or 220.

According to an embodiment, the rotor 210 may be configured to rotate by electromagnetic interaction with the stator 220. In an embodiment, the rotor 210 may include a rotor core 211 having a plurality of magnets (not shown) and a shaft 213 penetratingly coupled to the rotor core 211. Although not specifically illustrated in the drawings, a convection fan (not illustrated) may be coupled to one end of the shaft 213 that does not penetrate the rotor core 211, in which case during rotation of the rotor 210 the convection fan may rotate together with the shaft 213 to form an air flow.

According to an embodiment, the stator 220 may include a receiving portion 221 in which a hole 221a is formed to insert the rotor core 211, and a coil portion 222 in which a coil (not shown) is wound. When current is applied to the coil wound on the coil portion 222, the plurality of magnets (not shown) of the rotor 210 interact with magnetic field formed by the coil, thereby causing the rotor 210 to rotate.

According to an embodiment, the fixing part 230 may be provided to stably fix the convection assembly 200 to the rear wall 165 of the cavity 160. According to an embodiment, the fixing part 230 may include a first fixing member 231 for fixing the convection fan motor 210 or 220 to the rear wall 165 of the cavity 160 and a second fixing member 232 for supporting rotation of the rotor 210.

According to an embodiment, the first fixing member 231 may be fixed to a coupling portion 1651 or 1652 provided on the rear wall 165 of the cavity 160. For example, although not specifically illustrated in the drawings, the first fixing member 231 and the coupling portion 1651 or 1652 may be coupled to each other by means of various coupling structures, such as a hook coupling structure or a direct coupling structure using a fastening member (e.g., a screw). The coupling portion 1652 may be provided with a through hole 1652 for penetrating of the shaft 213 therein.

According to an embodiment, the second fixing member 232 may be coupled to the stator 220 together with the motor cover 240 through a fastening member P behind the stator 220. In an embodiment, the second fixing member 232 may be fittingly coupled to the shaft 213 of the rotor 210. The second fixing member 232 may include, for example, a bearing (not shown), which may stably support the rotational motion of the rotor 210.

As described above, when the convection fan motors 210 and 220 are driven, a magnetic field (or magnetic flux) flowing outward from the convection fan motors 210 and 220 may be formed. For example, the magnetic field generated by the convection fan motors 210 and 220 may be transmitted to surrounding structures, and when the magnetic field is transmitted to a structure (e.g., the rear wall 165 of the cavity 160) made of a ferromagnetic material among the surrounding structures (e.g. structures adjacent to convection fan motors (210, 220)), vibrations and noise due to the magnetic field may be generated in the structure.

In general, an electromagnetic force generated by a magnetic field may be expressed as Equation 1 below, in which it can be seen that the electromagnetic force is proportional to the square of the magnetic field.

## <Equation 1>

$$P = B^2/2\mu_0$$

wherein 'P' denotes the electromagnetic force, 'B' denotes the magnetic field, and '$\mu_0$' denotes the vacuum permeability.

When the convection fan motors 210 and 220 correspond to, for example, an AC motor type (but the type of the convection fan motors 210 and 220 is not limited thereto), the convection fan motors 210 and 220 are driven by an AC power that has periodicity and changes over time t, and thus the magnetic field may be expressed as a periodic function, wherein in case of a harmonic component included in the magnetic field, an intensity of the magnetic field may be expressed as Equation 2 below. Furthermore, using the above-described Equation 1 and the following Equation 2, the electromagnetic force may be expressed as Equation 3 below.

## <Equation 2>

$$B = B_0 \cos(t) + B_1 \cos(3t) + B_2 \cos(5t) \dots B_n \cos((2n + 1)t)$$

wherein 'B' denotes the magnetic field, 'Bn' denotes an amplitude of the electromagnetic force, and 't' denotes time.

## <Equation 3>

$$P = P_0 \cos(2t) + P_1 \cos(4t) + P_2 \cos(6t) \dots P_n \cos((2n + 2)t)$$

wherein 'P' denotes the electromagnetic force, 'Pn' denotes an amplitude of the electromagnetic force, and 't' denotes time.

Using the above equations, it may be seen that the electromagnetic force due to the magnetic field generated by the convection fan motors 210 and 220 occurs at frequencies that are even multiples of a power frequency (or input frequency). As a result, in order to reduce the electromagnetic peak noise caused by the magnetic field, it is necessary to reduce a magnitude of the magnetic field generated by the convection fan motors 210 and 220 or reduce the influence of the magnetic field on the surrounding structure adjacent to the convection fan motors 210 and 220. However, the former case may cause the motor to deteriorate in performance, so it is recommended to utilize a solution capable of reducing electromagnetic noise as in the latter case. Hereinafter, the motor cover 240 for reducing such electromagnetic noise will be described.

According to an embodiment, the motor cover 240 may be provided to surround at least a portion of the convection fan motors 210 and 220. For example, the motor cover 240 may surround or cover at least a portion of the convection fan motors 210 and 220 to block magnetic fields generated by operation of the motors 210 and 220 from flowing to the outside.

According to an embodiment, the motor cover 240 may include a pair of edge covers 240a and 240b surrounding both edge portions 223 and 224 of the convection fan motors 210 and 220. In an embodiment, the pair of edge covers 240a and 240b may be spaced apart from each other with a receiving portion 221 and/or a coil portion 222 of a stator 220 interposed therebetween. In an embodiment, the edge covers 240a and 240b may extend in a vertical direction along the edge portions 223 and 224 of the stator 220. In an embodiment, the edge covers 240a and 240b may be bent to surround the front, rear, and/or lateral sides of the edge portions 223 and 224 of the stator 220. According to an embodiment, the edge covers 240a and 240b may include a first cover portion 241 surrounding the front surface of the edge portions 223 and 224 of the convection motors 210 and 220, a second cover portion 242 surrounding the rear surface of the edge portions 223 and 224 of the convection motors 210 and 220, and a connecting portion 243 connecting the first cover portion 241 and the second cover portion 242. The connecting portion 243 may be disposed perpendicular to the first cover portion 241 and the second cover portion 242. The connecting portion 243 may have, for example, a planar shape.

According to an embodiment, as illustrated in FIG. 3, at least a portion of the motor cover 240 may be disposed between the rear wall 165 of the cavity 160 and the convection fan motors 210 and 220. For example, the motor cover 240 may be positioned between the convection fan motors 210 and 220 and a surrounding structure (e.g., the cavity 160) adjacent to the convection fan motors 210 and 220. According to an embodiment, the motor cover 240 may be spaced apart from the surrounding structure (e.g., the cavity 160) adjacent to the convection fan motors 210 and 220. The motor cover 240 may be positioned closer to the convection motors 210 and 220 than the surrounding structure.

According to an embodiment, the motor cover 240 may be made of a magnetic material to induce a magnetic field (or magnetic flux) generated upon driving of the convection fan motors 210 and 220. For example, the motor cover 240 may include a ferromagnetic material such as e.g., iron, cobalt, or nickel. For example, the motor cover 240 may include a ferromagnetic material having permeability substantially the same or greater than that of the surrounding structure (e.g.,

the cavity 160) adjacent to the convection assembly 200.

According to an embodiment, a thickness of the motor cover 240 may be designed in consideration of noise reduction and manufacturing convenience. In general, the thicker the motor cover 240, the greater the effect of reducing noise, but it becomes more difficult to manufacture the motor cover 240. The thickness of the motor cover 240 may be designed, for example, to have a range of about 0.1 mm to about 5 mm. However, the thickness of the motor cover 240 is not limited thereto.

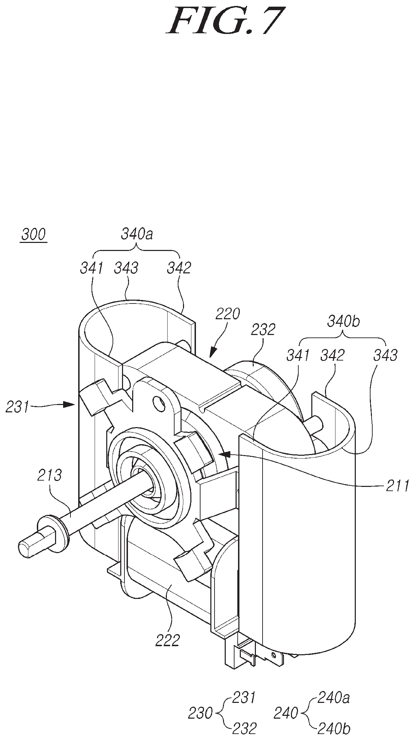

FIG. 7 is a perspective view of a convection assembly according to an embodiment of the disclosure.

FIG. 7 is a perspective view of a convection assembly 300 with a fan housing (e.g., the fan housing 250 of FIG. 2) and a convection fan (not shown) removed.

Referring to FIG. 7, the convection assembly 300 according to an embodiment may be configured to be substantially the same in function, shape, and/or structure as the convection assembly 200 illustrated in FIGS. 4 to 6. For convenience of description, when describing the convection assembly 300 illustrated in FIG. 7, the same reference numerals may be assigned to substantially the same components as those of the convection assembly 200 described above, wherein their related descriptions will be omitted and only different components will be described in detail.

According to an embodiment, the convection assembly 300 may include a rotor 210, a stator 220, a fixing part 230, and a motor cover 340.

According to an embodiment, the motor cover 340 may be provided to surround at least a portion of the convection fan motors 210 and 220. For example, the motor cover 340 may surround or cover at least a portion of the convection fan motors 210 and 220 to prevent a magnetic field generated upon driving of the motors 210 and 220 from flowing to the outside.

According to an embodiment, the motor cover 340 may include a pair of edge covers 340a and 340b surrounding both edge portions (223 and 224 of FIG. 6) of the convection fan motors 210 and 220. In an embodiment, the pair of edge covers 340a and 340b may be arranged spaced apart from each other with the receiving portion 221 and/or the coil portion 222 of the stator 220 interposed therebetween. In an embodiment, the edge covers 340a and 340b may extend in the vertical direction along the edge portions 223 and 224 of the stator 220. In an embodiment, the edge covers 340a and 340b may be bent to surround the front, rear, and/or lateral sides of the edge portions 223 and 224 of the stator 220. According to an embodiment, the edge covers 340a and 340b may include a first cover portion 341 surrounding the front surfaces of the edge portions 223 and 224 of the convection motors 210 and 220, a second cover portion 342 surrounding the rear surfaces of the edge portions 223 and 224 of the convection motors 210 and 220, and a connecting portion 343 connecting the first cover portion 341 and the second cover portion 342. The connecting portion 343 may extend to be convex outwardly of the convection fan motors 210 and 220 with respect to the first cover portion 341 and the second cover portion 342. The connecting portion 343 may have, for example, a curved shape.

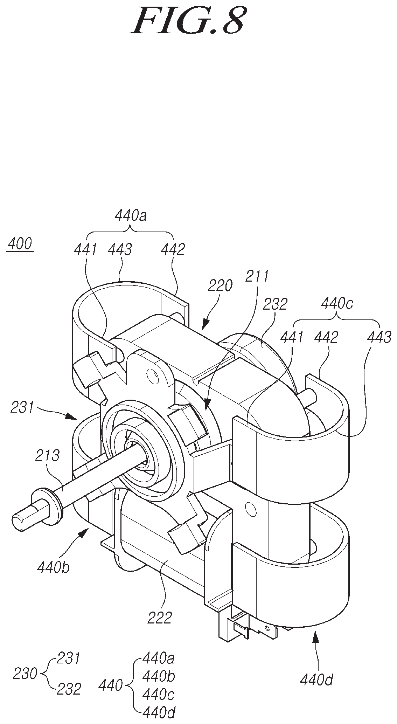

FIG. 8 is a perspective view of an example convection assembly according to an embodiment of the disclosure.

FIG. 8 is a perspective view of a convection assembly 400 with a fan housing (e.g., the fan housing 250 of FIG. 2) and a convection fan (not shown) removed.

Referring to FIG. 8, the convection assembly 400 according to an embodiment may be configured to be substantially the same in its function, shape, and/or structure as the convection assembly 200 illustrated in FIGS. 4 to 6. For convenience of description, when describing the convection assembly 400 illustrated in FIG. 8, the same reference numerals may be assigned to substantially the same components as those of the convection assembly 200 described above, wherein their redundant descriptions will be omitted, and only different components will be described in detail.

According to an embodiment, the convection assembly 400 may include a rotor 210, a stator 220, a fixing part 230, and a motor cover 440.

According to an embodiment, the motor cover 440 may include a plurality of corner covers 440a, 440b, 440c and 440d surrounding corners of the convection fan motors 210 and 220. In an embodiment, the plurality of corner covers 440a, 440b, 440c and 440d may be spaced apart from each other with the receiving portion 221 and/or the coil portion 222 of the stator 220 interposed therebetween. In an embodiment, the plurality of corner covers 440a, 440b, 440c, and 440d may be located in each corner portion of the stator 220. In an embodiment, the plurality of corner covers 440a, 440b, 440c, and 440d may be bent to surround the front, rear, and/or side of the corner portion of the stator 220. According to an embodiment, the plurality of corner covers 440a, 440b, 440c, and 440d may include a first cover portion 441 surrounding the front surface of the corner portion of the convection motor 210 or 220, a second cover portion 442 surrounding the rear surface of the corner portion of the convection motor 210 or 220, and a connecting portion 443 connecting the first cover portion 441 and the second cover portion 442. The connecting portion 443 may extend to be convex outwardly of the convection fan motors 210 and 220 with respect to the first cover portion 441 and the second cover portion 442. The connecting portion 443 may have, for example, a curved shape. However, as opposed to the drawing, the connecting portion 443 may have a planar shape like the connecting portion 243 illustrated in FIG. 6.

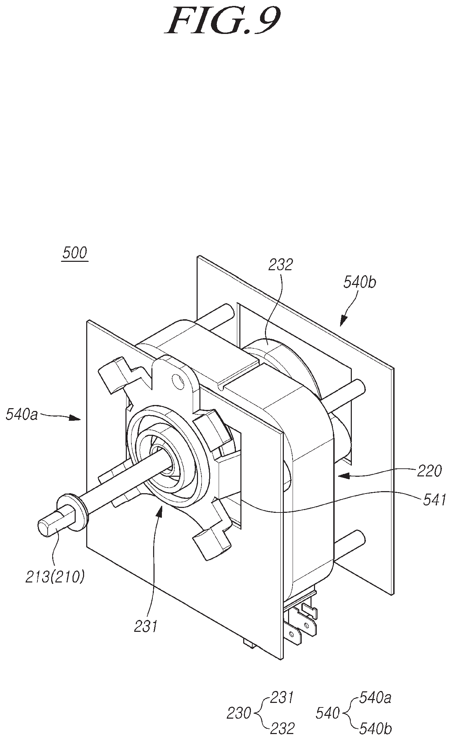

FIG. 9 is a perspective view of an example convection assembly according to an embodiment of the disclosure.

FIG. 9 is a perspective view of a convection assembly 500 with a fan housing (e.g., the fan housing 250 of FIG. 2) and a convection fan (not shown) removed.

Referring to FIG. 9, the convection assembly 500 according to an embodiment may be configured to be substantially the same in its function, shape, and/or structure as the convection assembly 200 illustrated in FIGS. 4 to 6. For convenience of description, in describing the convection assembly 500 illustrated in FIG. 9, the same reference numerals are assigned to substantially the same components as those of the convection assembly 200 described above, wherein their redundant descriptions will be omitted and only different components will be described in detail.

According to an embodiment, the convection assembly 500 may include a rotor 210, a stator 220, a fixing part 230, and a motor cover 540.

According to an embodiment, the motor cover 540 may have a plate shape. According to an embodiment, the motor cover 540 may include a first cover plate 540a disposed to overlap the front surface of the convection motors 210 and 220, and a second cover plate 540b spaced apart from the first cover plate 540a and disposed to overlap the rear surface of the convection motors 210 and 220. In an embodiment, the first cover plate 540a may include a through hole 541 through which a first fixing member 231 passes. Although not specifically illustrated herein, the first cover plate 540a may be sequentially disposed from front to rear with the rear wall 165 of the cavity 160 and the first fixing member 231 interposed therebetween. Further, the motor cover 540 may cover the front and rear sides of the convection fan motors 210 and 220 throughout the remaining portion of the first cover plate 540a except for the portion where the first fixing member 231 passes through the through hole 541 of the first cover plate 540a.

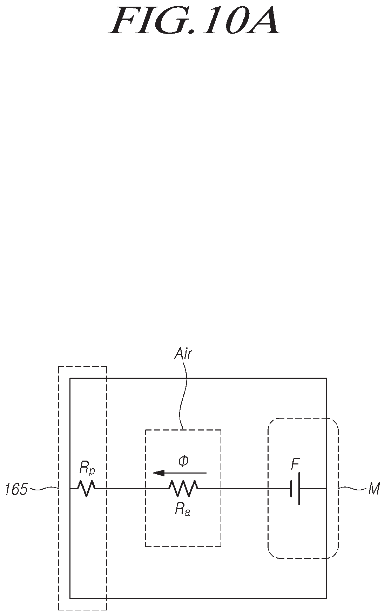

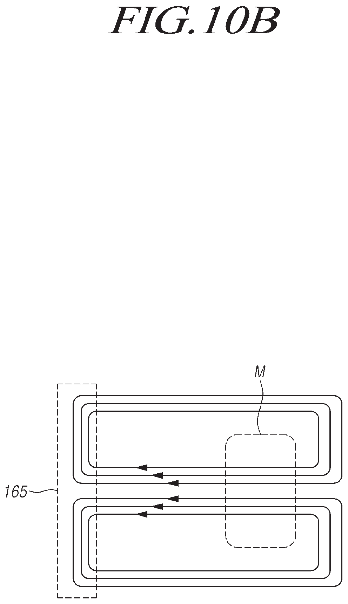

FIGS. 10A and 10B are diagrams schematically illustrating a magnetic circuit between a surrounding structure and a convection fan motor according to a comparative example of the disclosure.

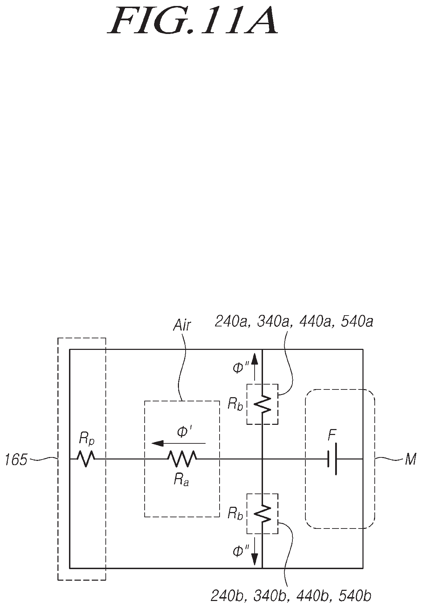

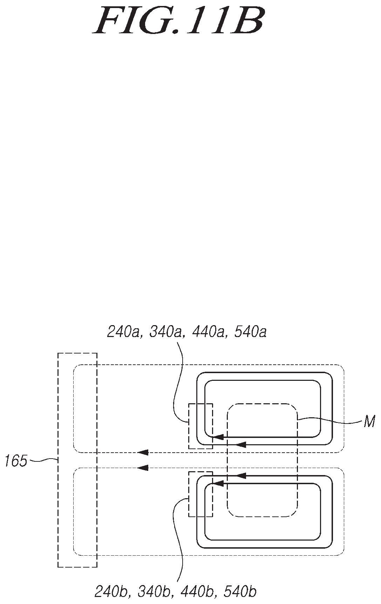

FIGS. 11A and 11B are diagrams schematically illustrating a magnetic circuit between a surrounding structure and a convection fan motor according to an embodiment of the disclosure.

FIG. 10A is a magnetic circuit representing a convection fan motor M (e.g., the convection fan motors 210 and 220 of FIG. 3), air, and a surrounding structure (e.g., the rear wall 165 of the cavity 160 of FIG. 3). FIG. 10B is a diagram schematically illustrating a path through which a magnetic field is transmitted in the magnetic circuit of FIG. 10A.

FIG. 11A is a magnetic circuit representing a convection fan motor M, motor covers 240, 340, 440, and 540, air, and a surrounding structure 165. FIG. 11B is a diagram schematically illustrating a path through which a magnetic field is transmitted in the magnetic circuit of FIG. 11A.

Referring to Equation 4 and Equation 5 below, it may be seen that a magnetomotive force, a magnetic flux, and a magnetic resistance in a magnetic circuit generally correspond to voltage, current, and resistance in an electric circuit, respectively.

<center>

**<Equation 4>**

$$F_m = \phi R_m$$

</center>

wherein 'Fm' means a magnetomotive force, '$\phi$' means a magnetic flux, and 'Rm' means a magnetic resistance.

<center>

**<Equation 5>**

$$\phi = BS$$

</center>

wherein 'B' means a magnetic field, and 'S' means an area through which a magnetic force line passes.

Referring back to FIG. 3, since the convection fan motor M is coupled to the rear wall 165 of the cavity 160 with the stator 220 exposed, the magnetic field (or magnetic flux) generated by the convection fan motor M is transmitted to the rear wall 165 of the cavity 160 to cause electromagnetic peak noise.

For example, as shown in FIGS. 10A and 10B, in the comparative example in case where the motor covers 240, 340, 440, and 540 are not provided, a magnetic field is generated due to a magneto-motive force when the power is applied the convection motor M, and a magnetic field (or a magnetic force line) is transmitted to the rear wall 165 of the cavity 160 through air to generate electromagnetic peak noise.

On the other hand, as shown in FIGS. 11A and 11B, in case where the motor covers 240, 340, 440, and 540 are provided according to an embodiment of the disclosure, when the power is applied to the convection motor M, the magnetic field is transmitted to the motor covers 240, 340, 440, and 540 including a ferromagnetic material having a lower magnetic resistance Rb than the magnetic resistance Ra of the air, thereby reducing the magnitude of the electromagnetic force acting on the rear wall 165 of the cavity 160, and thus causing the electromagnetic peak noise to decrease. As a result, the motor covers 240, 340, 440, and 540 provided in the convection fan motor M may reduce the noise without affecting the performance of the cooking appliance, for example, an oven.

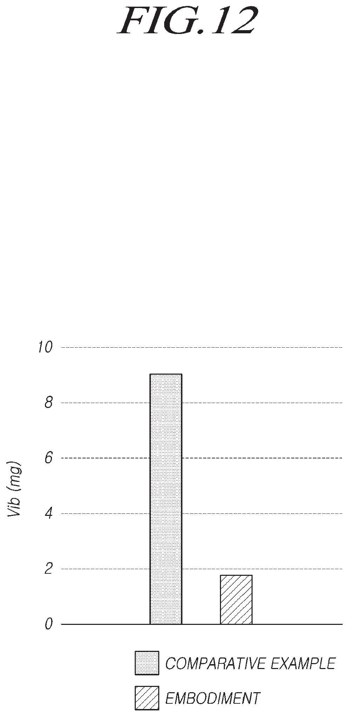

FIG. 12 is a graph for comparing the amount of vibrations of an embodiment of the disclosure and a comparative example.

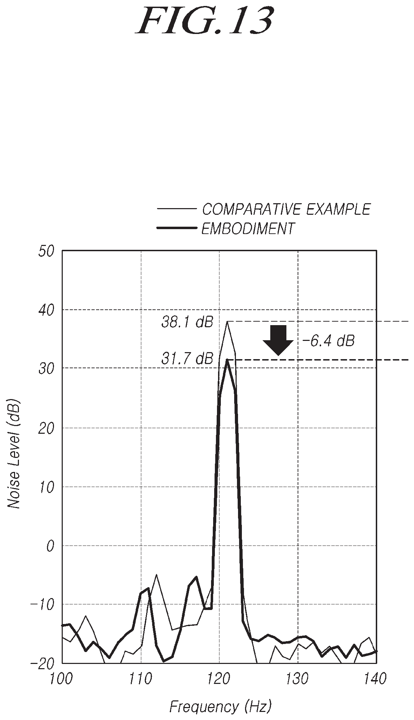

FIG. 13 is a graph for comparing noises of an embodiment of the disclosure and a comparative example.

Referring to FIG. 12, in the case of a comparative example where such a motor cover (e.g., the motor cover 240 of FIG. 3) is not provided, an amount of vibration of about 9 mg is detected on the rear wall 165 of the cavity (e.g., the cavity 160 of FIG. 3) when power is applied to the convection fan motor (e.g., 210 or 220 of FIG. 3), whereas in the case of an embodiment of the disclosure where the motor cover 240 is provided, an amount of vibration of about 2 mg is detected when power is applied to the convection fan motors 210 and 220, thereby revealing the amount of vibration reduced by about 7 mg compared to the comparative example.

Referring to FIG. 13, in the comparative example where the motor cover 240 is not provided, noise of about 38.1dB is measured in a frequency band (about 120hz) twice the power frequency, when power is applied to the convection fan motors 210 and 220, whereas in the embodiment of the disclosure with the motor cover 240 provided, noise of about 31.7dB is measured when power is applied to the convection fan motors 210 and 220, thereby revealing the noise level reduced by about 6.4dB compared to the comparative example.

An oven 10 according to an embodiment of the disclosure may include a cavity 160 forming a cooking chamber 110a therein. The oven 10 may include a convection assembly 200, 300, 400, or 500 disposed on a rear wall 165 of the cavity 160. The convection assembly 200, 300, 400, or 500 may include a convection fan to form an air flow in the cooking chamber 110a, a convection motor 210 or 220 to generate a driving force to the convection fan, and a motor cover 240, 340, 440, or 540 to surround at least a portion of the convection motor 210 or 220. The motor cover 240, 340, 440, or 540 may be made of a magnetic material to induce magnetic flux generated upon driving of the convection motor 210 or 220.

According to an embodiment, at least a portion of the motor cover 240, 340, 440, or 540 may be disposed between the rear wall 165 of the cavity 160 and the convection motor 210 or 220.

According to an embodiment, the motor cover 240, 340, 440, or 540 may be spaced apart from the rear wall 165 of the cavity 160 and may be positioned closer to the convection motor 210 or 220 than the rear wall 165.

According to an embodiment, the motor cover 240 or 340 may include at least one pair of edge covers 240a, 240b, 340a, and 340b to surround both edge portions 223 and 224 of the convection motor 210 or 220.

According to an embodiment, each of the pair of edge covers 240a, 240b, 340a, and 340b may include a first cover 241 or 341 to surround a front surface of the edge portions 223 and 224 of the convection motor 210 or 220, a second cover 242 or 342 to surround a rear surface of the edge portions 223 and 224 of the convection motor 210 or 220, and a connecting portion 243 or 343 to connect the first cover 241 or 341 and the second cover 242 or 342.

According to an embodiment, the connecting portion 243 of the edge cover 240a or 240b may have a planar shape.

According to an embodiment, the connecting portion 343 of the edge cover 340a or 340b may have a curved shape.

According to an embodiment, the motor cover 440 may include a plurality of corner covers 440a, 440b, 440c, and 440d to surround corner portions of the convection motor 210 or 220.

According to an embodiment, each of the plurality of corner covers 440a, 440b, 440c, and 440d may include a first cover 441 to surround a front surface of a corner portion of the convection motor 210 or 220, a second cover 442 to surround a rear surface of a corner portion of the convection motor 210 or 220, and a connecting portion 443 to connect the first cover 441 and the second cover 442.

According to an embodiment, the connecting portion 443 of the plurality of corner covers 440a, 440b, 440c, and 440d may have a planar shape or a curved shape.

According to an embodiment, the motor cover 540 may include a first cover plate 540a disposed to overlap a front surface of the convection motor 210 or 220, and a second cover plate 540b spaced apart from the first cover plate 540a and disposed to overlap a rear surface of the convection motor 210 or 220.

According to an embodiment, at least one of the first cover plate 540a and the second cover plate 540b may have a plate shape.

According to an embodiment, the motor cover 240, 340, 440, or 540 may be made of a ferromagnetic material having substantially same or greater magnetic permeability as that of the cavity 160.

According to an embodiment, the motor cover 240, 340, 440, or 540 may be made of at least one of iron, cobalt, and nickel.

According to an embodiment, the convection motor 210 or 220 may include a rotor 210 including a shaft 213, and a stator 220 including a first part 221 in which the rotor 210 is accommodated and a second part 222 having a coil is wound therein. The motor cover 240, 340, 440, or 540 may cover at least a portion of the stator 220.

According to an embodiment, the motor cover 240, 340, 440, or 540 may have a thickness ranging from about 0.1 mm to about 5 mm.

A cooking appliance 1 according to an embodiment of the disclosure may include a cooktop 20 disposed on an upper side of the cooking appliance. The cooking appliance 1 may include an oven 10 disposed underneath the cooking appliance. The oven 10 may include a cavity 160 forming a cooking chamber 110a therein. The oven 10 may include a convection assembly 200, 300, 400, or 500 disposed on a rear wall 165 of the cavity 160. The convection assembly 200, 300, 400, or 500 may include a convection fan to form an air flow in the cooking chamber 110a, a convection motor 210 or 220 to generate a driving force to the convection fan, and a motor cover 240, 340, 440, or 540 to surround at least a portion of the convection motor 210 or 220. The motor cover 240, 340, 440, or 540 may be made of a magnetic material to induce magnetic flux generated upon driving of the convection motors 210 or 220

According to an embodiment, the motor cover 240 or 340 may include at least one pair of edge covers 240a, 240b, 340a, and 340b to surround both edge portions 223 and 224 of the convection motor 210 or 220.

According to an embodiment, the motor cover 440 may include a plurality of corner covers 440a, 440b, 440c, and 440d to surround corner portions of the convection motor 210 or 220.

According to an embodiment, the motor cover 540 may include a first cover plate 540a disposed to overlap a front surface of the convection motor 210 or 220, and a second cover plate 540b spaced apart from the first cover plate 540a and disposed to overlap a rear surface of the convection motor 210 or 220.

**Claims**

1. An oven (10) comprising:

   a cavity (160) forming a cooking chamber (110a) therein; and
   a convection assembly (200, 300, 400, 500) disposed on a rear wall (165) of the cavity (160),
   wherein the convection assembly (200, 300, 400, 500) comprise:

   a convection fan to form an air flow in the cooking chamber (110a);
   a convection motor (210, 220) to generate a driving force to the convection fan; and
   a motor cover to surround at least a portion of the convection motor,

   wherein the motor cover (240, 340, 440, 540) is made of a magnetic material to induce magnetic flux generated upon a driving of the convection motor (210, 220).

2. The oven of claim 1, wherein at least a portion of the motor cover (240, 340, 440, 540) is disposed between the rear wall (165) of the cavity (160) and the convection motor (210, 220).

3. The oven of claim 1, wherein the motor cover (240, 340, 440, 540) is spaced apart from the rear wall (165) of the cavity (160) and is positioned closer to the convection motor (210, 220) than the rear wall (165).

4. The oven of claim 1, wherein the motor cover (240, 340) comprises at least one pair of edge covers (240a, 240b, 340a, 340b) to surround both edge portions (223, 224) of the convection motor (210, 220).

5. The oven of claim 4, wherein each of the one pair of edge covers (240a, 240b, 340a, 340b) comprises a first cover (241, 341) to surround a front surface of the edge portion (223, 224) of the convection motor (210, 220), a second cover (242, 342) to surround a rear surface of the edge portion (223, 224) of the convection motor (210, 220), and a connecting portion (243, 343) to connect the first cover (241, 341) and the second cover (242, 342).

6. The oven of claim 5, wherein the connecting portion (243) of the edge cover (240a, 240b, 340a, 340b) has a planar shape or a curved shape.

7. The oven of claim 1, wherein the motor cover (440) comprises a plurality of corner covers (440a, 440b, 440c, 440d) to surround a corner portion of the convection motor (210, 220).

8. The oven of claim 7, wherein each of the plurality of corner covers (440a, 440b, 440c, 440d) comprises a first cover (441) to surround a front surface of the corner portion of the convection motor (210, 220), a second cover (442) to surround a rear surface of the corner portion of the convection motor (210, 220), and a connecting portion (443) to connect the first cover (441) to the second cover (442).

9. The oven of claim 1, wherein the motor cover (540) comprises a first cover plate (540a) disposed to overlap a front surface of the convection motor (210, 220), and a second cover plate (540b) spaced apart from the first cover plate (540a) and disposed to overlap a rear surface of the convection motor (210, 220).

10. The oven of any one of claims 1 to 9, wherein the motor cover (240, 340, 440, 540) is made of a ferromagnetic material having a magnetic permeability substantially same as or greater than that of the cavity (160).

11. The oven of any one of claims 1 to 10, wherein the convection motor (210, 220) comprises:

a rotor (210) including a shaft (213); and
a stator (220) including:

a first part (221) in which the rotor (210) is accommodated; and
a second part (222) having a coil is wound therein; and

wherein the motor cover (240, 340, 440, 540) covers at least a portion of the stator (220).

12. A cooking appliance (1), comprising:

a cooktop (20) disposed on top of the cooking appliance; and
an oven (10) disposed underneath the cooking appliance,
wherein the oven (10) comprises:

a cavity (160) forming a cooking chamber (110a) therein; and
a convection assembly (200, 300, 400, 500) disposed on a rear wall (165) of the cavity (160),
wherein the convection assembly (200, 300, 400, 500) comprise:

a convection fan to form an air flow in the cooking chamber (110a);
a convection motor (210, 220) to generate a driving force to the convection fan; and
a motor cover (240, 340, 440, 540) to surround at least a portion of the convection motor (210, 220),

wherein the motor cover (240, 340, 440, 540) is made of a magnetic material to induce magnetic flux generated upon driving of the convection motor (210, 220).

13. The cooking appliance of claim 12, wherein the motor cover (240, 340) comprises at least one pair of edge covers (240a, 240b, 340a, 340b) to surround both edge portions (223, 224) of the convection motor (210, 220).

14. The cooking appliance of claim 12, wherein the motor cover (440) comprises a plurality of corner covers (440a, 440b, 440c, 440d) to surround a corner portion of the convection motor (210, 220).

15. The cooking appliance of claim 12, wherein the motor cover (540) comprises a first cover plate (540a) disposed to overlap a front surface of the convection motor (210, 220), and a second cover plate (540b) spaced apart from the first cover plate (540a) and disposed to overlap a rear surface of the convection motor (210, 220).

# FIG.1

# FIG.2

# FIG.3

# FIG.4

# FIG.5

# FIG.6

# FIG.7

# *FIG.8*

# FIG.9

# FIG.10A

# FIG.10B

# FIG.11A

# *FIG.11B*

240a, 340a, 440a, 540a

M

165

240b, 340b, 440b, 540b

# *FIG.12*

## FIG.13

# EP 4 768 791 A1

<table>
<tr><td colspan="2"><strong>INTERNATIONAL SEARCH REPORT</strong></td><td>International application No.<br><strong>PCT/KR2024/014865</strong></td></tr>
</table>

| A. | CLASSIFICATION OF SUBJECT MATTER |
|---|---|

**F24C 15/32**(2006.01)i; **F24C 11/00**(2006.01)i; **H02K 7/14**(2006.01)i; **H02K 5/24**(2006.01)i; **H02K 11/02**(2006.01)i; **H02K 5/04**(2006.01)i; **F24C 7/06**(2006.01)i; **F24C 3/08**(2006.01)i

According to International Patent Classification (IPC) or to both national classification and IPC

| B. | FIELDS SEARCHED |
|---|---|

Minimum documentation searched (classification system followed by classification symbols)

F24C 15/32(2006.01); F04D 25/08(2006.01); F04D 29/52(2006.01); F04D 29/66(2006.01); F24C 15/08(2006.01); F24C 7/04(2006.01); H02K 5/00(2006.01); H02K 7/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오븐(oven), 팬(fan), 커버(cover), 캐비티(cavity), 자성체(magnet), 조리 기기 (cooking appliance)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-1743298 B1 (LG ELECTRONICS INC.) 02 June 2017 (2017-06-02)<br>See paragraphs [0002], [0013], [0014], [0019], [0033]-[0035] and [0065] and figures 1 and 3. | 1-15 |
| Y | JP 08-336256 A (ORIENTAL MOTOR CO., LTD.) 17 December 1996 (1996-12-17)<br>See paragraphs [0015], [0019] and [0021] and figures 3 and 4. | 1-15 |
| Y | JP 2008-190434 A (SHARP CORP.) 21 August 2008 (2008-08-21)<br>See paragraphs [0044] and [0050] and figure 1. | 4-8,13,14 |
| A | JP 11-275795 A (FUJI PHOTO OPTICAL CO., LTD.) 08 October 1999 (1999-10-08)<br>See paragraph [0016] and figure 1. | 1-15 |
| A | JP 62-119495 U (JAPAN SERVO CO., LTD.) 29 July 1987 (1987-07-29)<br>See claim 1 and figure 2. | 1-15 |

☐ Further documents are listed in the continuation of Box C.  ☑ See patent family annex.

| | Special categories of cited documents: | | |
|---|---|---|---|
| "A" | document defining the general state of the art which is not considered to be of particular relevance | "T" | later document published after the international filing date or priority date and not in conflict with the application but cited to understand the principle or theory underlying the invention |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 January 2025** | **08 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/014865**

| Patent document cited in search report | | | Publication date (day/month/year) | Patent family member(s) | | | Publication date (day/month/year) |
|---|---|---|---|---|---|---|---|
| KR | 10-1743298 | B1 | 02 June 2017 | KR | 10-2012-0079360 | A | 12 July 2012 |
| JP | 08-336256 | A | 17 December 1996 | DE | 19652331 | C1 | 14 May 1998 |
| | | | | JP | 09-019102 | A | 17 January 1997 |
| | | | | JP | 3512269 | B2 | 29 March 2004 |
| | | | | JP | 3629299 | B2 | 16 March 2005 |
| JP | 2008-190434 | A | 21 August 2008 | None | | | |
| JP | 11-275795 | A | 08 October 1999 | None | | | |
| JP | 62-119495 | U | 29 July 1987 | None | | | |

Form PCT/ISA/210 (patent family annex) (July 2022)